# EUROPEAN PATENT APPLICATION

(11) **EP 3 176 564 A1**
(43) Date of publication of application: **07.06.2017**
(21) Application number: 16196554.6
(22) Date of filing: 31.10.2016
(51) Int. Cl.: G01N 21/31, G01J 3/427, G01J 3/433, G01N 21/39, G01N 21/85, G01N 21/27, G01N 21/03, G01N 21/15, G01N 21/53

(54) **LASER-TYPE GAS ANALYZING APPARATUS**

(30) Priority: 03.12.2015 JP 2015236889; 20.05.2016 JP 2016101970
(71) Applicant: Fuji Electric Co., Ltd., Kawasaki-shi, Kanagawa 210-9530 (JP)
(72) Inventor: HIGASHI, Ryoichi, Kawasaki-shi, Kanagawa 210-9530 (JP); KOIZUMI, Kazuhiro, Kawasaki-shi, Kanagawa 210-9530 (JP); TAKEDA, Naoki, Kawasaki-shi, Kanagawa 210-9530 (JP); HIRAYAMA, Noritomo, Kawasaki-shi, Kanagawa 210-9530 (JP)
(74) Representative: MERH-IP Matias Erny Reichl Hoffmann Patentanwälte PartG mbB

(57) **Abstract**

Provided is a laser-type gas analyzing apparatus including a radiating section (106) that radiates laser light from outside a side wall (12) of a flue (10), through an opening portion (14) provided in the side wall (12), and onto an inner surface of the side wall (12) opposite the opening portion (14); a light receiving section (116) that receives the laser light reflected by the inner surface; and a calculating section (104) that calculates a concentration of a target gas passing through the flue (10), based on an intensity of the laser light output by the radiating section (106) and an intensity of the laser light received by the light receiving section (116).

## Description

### BACKGROUND

### 1. TECHNICAL FIELD

The present invention relates to a laser-type gas analyzing apparatus.

### 2. RELATED ART

A laser analyzer is an apparatus that analyzes a gas concentration, dust amount, or the like. A laser analyzer irradiates a measurement region with laser light having a narrow spectral width and including a wavelength that is an absorption line of a prescribed gas that is the measurement target. The radiated laser light is absorbed by the target gas within the measurement region, and is attenuated according to the propagation distance. The laser analyzer detects the laser light that has passed through the measurement region with a light receiving element, and measures the concentration of the target gas included in the measurement region from a change in the intensity of the laser light before and after passing through the measurement region. Furthermore, the laser analyzer measures the amount of dust by irradiating the measurement region with laser light having a wavelength that is not absorbed by the target gas and using a light receiving element to detect the attenuation amount or a portion of the scattered light of the laser light caused by scattering or absorption due to the dust.

Conventionally, in order to measure the gas concentration within a combustion gas passing through a flue, a laser analyzer emits laser light from a light source in a manner to be substantially orthogonal to the flue, receives the laser light that has passed through the combustion gas with a light receiving section, and measures the concentration of the target gas included in the combustion gas. A conventional laser analyzer has openings formed at two locations in side walls of the flue and has a light emitting section and a light receiving section arranged in a manner to sandwich the flue.
Patent Document 1: Japanese Patent Application Publication No. 2013-113647

A conventional laser analyzer requires openings to be provided at two locations in the side walls of the flue. When attaching and arranging the laser analyzer in a flue that has already been designed, a significant amount of attachment machining must be performed on the side walls of the flue.

### SUMMARY

According to a first aspect of the present invention, provided is a laser-type gas analyzing apparatus comprising a radiating section that radiates laser light from outside a side wall of a flue, through an opening portion provided in the side wall, and onto an inner surface of the side wall opposite the opening portion; a light receiving section that receives the laser light reflected by the inner surface; and/or a calculating section that calculates a concentration of a target gas passing through the flue, based on an intensity of the laser light output by the radiating section and an intensity of the laser light received by the light receiving section.

The radiating section may be operable to selectively radiate, as the laser light, first laser light having a wavelength centered on a first wavelength and second laser light having a wavelength centered on a second wavelength that is different from the first wavelength. The calculating section may calculate the concentration while reducing an effect of components other than the target gas, based on an intensity of the first laser light and an intensity of the second laser light output by the radiating section and the intensity of the first laser light and the intensity of the second laser light received by the light receiving section.

The laser-type gas analyzing apparatus may comprise an optical element that is provided in a light path of the laser light emitted from the radiating section and refracts the laser light reflected by the inner surface toward the light receiving section.

The optical element that refracts the laser light toward the light receiving section may include a passing portion that passes the laser light radiated from the radiating section. The optical element may be a concave mirror that focuses the laser light reflected by the inner surface on the light receiving section.

The optical element that refracts the laser light toward the light receiving section may a half mirror.

The laser-type gas analyzing apparatus may comprise an optical system that has a focal point at a point where the laser light radiated from the radiating section intersects with the inner surface and has an imaging point at one point on a light receiving surface of the light receiving section.

The laser-type gas analyzing apparatus may comprise a securing section that is secured to the side wall, and a protective member that is arranged closer to the radiating section side than the securing section and seals the optical path while allowing the laser light to pass through. A surface of the protective member may diagonally intersect a surface of the side wall.

The radiating section of the laser-type gas analyzing apparatus may pulse-radiate the laser light. The light receiving section may delay a light reception timing relative to a radiation timing of the pulse radiation. A delay time for the light reception timing may be set based on distance to the inner surface.

The laser-type gas analyzing apparatus may comprise a discharging section that discharges an auxiliary gas from the opening portion to the flue.

The radiating section and the light receiving section may be arranged such that a space through which the laser light passes as seen from a light receiving surface of the light receiving section is maximized at the inner surface.

The laser-type gas analyzing apparatus may comprise a target surface that is opposite the opening portion and is irradiated by the laser light instead of the inner surface.

The radiating section and the light receiving section may be arranged such that a space through which the laser light passes as seen from a light receiving surface of the light receiving section is maximized at the target surface.

The laser-type gas analyzing apparatus may comprise a speckle reducing element in the light path of the laser light emitted from the radiating section.

The summary clause does not necessarily describe all necessary features of the embodiments of the present invention. The present invention may also be a subcombination of the features described above.

### BRIEF DESCRIPTION OF THE DRAWINGS

Fig. 1 is a schematic view of a configuration of a gas analyzing apparatus according to a first embodiment.
Fig. 2 shows exemplary spectral absorption rate characteristics of a target gas and dust.
Fig. 3 is a drawing for explaining the basics of the relationship between the emitted light intensities and received light intensities of the first laser light and the second laser light.
Fig. 4 shows the relationship between the light emission time and the light reception time of the pulse light.
Fig. 5 is a schematic view of a configuration of a gas analyzing apparatus according to a second embodiment.
Fig. 6 is a schematic view of a configuration of a gas analyzing apparatus according to a third embodiment.
Fig. 7 is a schematic view of a configuration of a laser-type gas analyzing apparatus according to a fourth embodiment.
Fig. 8 is a schematic view of a configuration of a laser-type gas analyzing apparatus according to a fifth embodiment.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

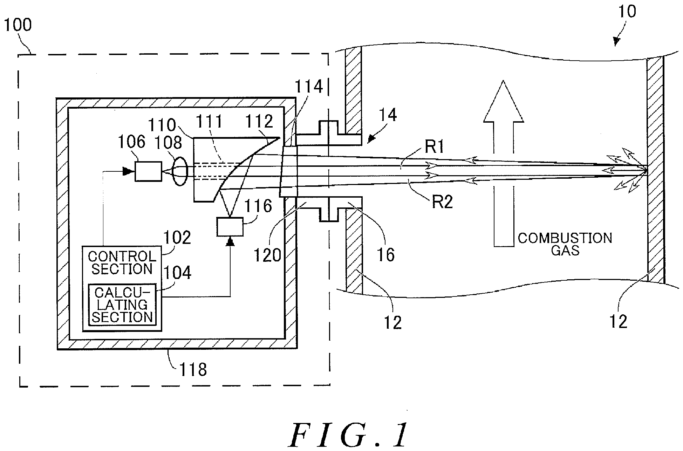

Fig. 1 is a schematic view of a configuration of a gas analyzing apparatus 100 according to a first embodiment. The flue 10 includes a side wall 12, only one opening portion 14 provided in the side wall 12, and a flange 16 provided in the opening portion 14 for securing the gas analyzing apparatus 100. The inner diameter of the flue 10 is from 0.25 m to 10 m, and a high-temperature combustion gas that is expelled from a combustion machine, such as a boiler or engine, flows through the inside of the flue 10.

The gas analyzing apparatus 100 is secured outside the flue 10 by being fused to the side wall 12, for example. The gas analyzing apparatus 100 measures the concentration of a target gas, such as residual oxygen (O₂), contained in the combustion gas flowing through the flue 10. In addition to the target gas, dust, water vapor, and the like are contained in the combustion gas.

The gas analyzing apparatus 100 includes a control section 102, a laser element 106, a collimating lens 108, a concave mirror 110, an optical window 114, and a light receiving element 116. The gas analyzing apparatus 100 includes a case 118 and a flange 120.

The gas analyzing apparatus 100 is secured to the side wall 12 of the flue 10 by having the flange 120 fused to the flange 16. The method of securing the flange 16 and the flange 120 to each other is not limited to fusion, and various securing methods that achieve an air-tight bond in high-temperature environments can be adopted. The case 118 is attached to the flange 120.

The control section 102 performs overall control of the operations of each component of the gas analyzing apparatus 100. The control section 102 controls the timing for switching the wavelength of the laser light emitted by the laser element 106, which is described further below. The control section 102 includes a calculating section 104. The calculating section 104 calculates the concentration of the target gas using a known calculation method, based on the intensity of the laser light emitted from the laser element 106 and the intensity of this laser light received by the light receiving element 116.

The laser element 106 is a semiconductor laser element whose oscillation wavelength is variable according to the applied current and the operating temperature. In the present embodiment, the laser element 106 is a DFB (Distributed Feedback Laser). The laser element 106 is not limited to being a DFB, and a DBR (Distributed Bragg Reflector) laser, VCSEL (Vertical Cavity Surface Emitting Laser), and the like can be used instead. The laser element 106 has its applied current and operating temperature controlled by a current control section and a temperature control section (not shown), in a manner to have the wavelength of the laser element 106 controlled to be a first wavelength λ₁ or a second wavelength λ₂, which are described further below.

The laser element 106 selectively emits first laser light having a wavelength centered on the first wavelength λ₁ and second laser light having a wavelength centered on the second wavelength λ₂, which is different from the first wavelength λ1. Here, the first wavelength λ₁ is a wavelength that is selectively absorbed by the absorption characteristics of the target gas, i.e. an absorption line. Furthermore, the second wavelength is a wavelength that is not significantly absorbed by the target gas. The first wavelength λ₁ and the second wavelength λ₂ are described further below with reference to the drawings.

The laser element 106 emits the first laser light or the second laser light toward the collimating lens 108. In the following description, the laser element 106 side may be referred to as being "forward" or the "front side," and the flue 10 side may be referred to as being "backward" or the "back side."

The collimating lens 108 is arranged behind the laser element 106, converts the laser light emitted by the laser element 106 into collimated light, and emits this collimated light to the concave mirror 110 arranged farther backward. The collimating lens 108 is arranged such that the beam waist of the laser light is positioned near a front focal point position. In order to convert the laser light into collimated light with a high degree of collimation, an aspherical lens is used for the collimating lens 108. Fig. 1 shows the collimating lens 108 as being represented by a single lens, but the collimating lens 108 may be configured using a plurality of lenses instead. Furthermore, the collimating lens 108 may be a reflective optical element, such as a mirror.

The concave mirror 110 includes a hole portion 111 and a reflective surface 112. The concave mirror 110 is arranged behind the collimating lens 108, such that the laser light emitted by the collimating lens 108 passes through the hole portion 111. The inner diameter of the hole portion 111 has only to be large enough to pass the laser light from the collimating lens 108. Here, "large enough" is a size that prevents the laser light input from the collimating lens 108 from being blocked by the concave mirror 110.

The laser light that has passed through the hole portion 111 of the concave mirror 110 passes transparently through the optical window 114 arranged behind the concave mirror 110 and is emitted to the flue 10 as radiated light R1. The radiated light R1 is reflected and/or scattered by the inner surface of the flue 10, and a part of this light passes through the optical window 114 again as reflected light R2 to be incident to the reflective surface 112 of the concave mirror 110.

The reflective surface 112 is arranged such that the concave surface faces the flue 10 side. The reflective surface 112 is an off-axis parabolic surface that is arranged such that the optical axis thereof is shifted from the central beam axis of the laser light. The shape of the reflective surface 112 is not limited to being parabolic, and can be any of a variety of surface shapes. For example, the reflective surface 112 may be a spherical surface, or may be a conical surface such as an elliptical surface or hyperbolic surface. If an elliptical surface is adopted for the reflective surface 112, the irradiation point of the radiated light R1 on the inner surface of the flue 10 and the focusing point on the light receiving surface of the light receiving element 116 may be arranged to be positioned at respective focal points of the elliptical surface. The reflected light R2 focused by the concave mirror 110 has only to be focused in an effective region of the light receiving surface of the light receiving element 116, and the size of the spot diameter thereof is allowed to be within a range falling within this effective region.

The reflective surface 112 bends the reflected light R2 that has been reflected and/or scattered by the inner surface of the flue 10, and focusses this light on the light receiving surface of the light receiving element 116. In other words, the reflective surface 112 causes the reflected light R2 incident thereto to be focused on the light receiving element 116 arranged outside of the region through which the reflected light R2 passed. Accordingly, since the reflected light R2 is not blocked by the light receiving element 116, it is possible to ensure a large practical reflective surface area on the reflective surface 112 and to increase the gas detection sensitivity.

The optical window 114 is arranged in front of the flange 120, and serves as a protective member. The optical window 114 seals the optical path while transparently passing the laser light. In other words, the optical window 114 prevents the combustion gas flowing through the flue 10 from entering into the case 118. Furthermore, in order to prevent interference with the laser light caused by reflection between surfaces, the optical window 114 has a wedge shape in which the incidence surface and the emission surface are not parallel.

The light receiving element 116 receives the reflected light R2 that has been reflected and/or scattered by the inner surface of the flue 10 and focused by the concave mirror 110. The light receiving element 116 converts the intensity signal of the received light into a received light signal, which is an electrical signal, and transmits the received light signal to control section 102. The light receiving element 116 is an avalanche photodiode, for example. However, various types of light receiving elements can be used as the light receiving element 116, according to the desired sensitivity and laser light wavelength used for the measurement. The light receiving element 116 can use a photomultiplier, an MCT photoconductive element, or the like. The light receiving element 116 may include a band-transparent filter that transparently passes light in a narrow band including the wavelength band of the laser light used in the measurement and blocks or attenuates other bands.

The following describes the gas concentration detection method. The temperature and current value of the laser element 106 are controlled by the control section 102 in a manner to alternate between the first laser light having the first wavelength λ₁ that is selectively absorbed by the target gas and the second laser light having the second wavelength λ₂ that is not absorbed by the target gas.

The first laser light and the second laser light are emitted from the laser element 106 at different timings and converted into collimated light by the collimating lens 108. The first laser light and the second laser light then pass through the space within the flue 10, are reflected and/or scattered by the inner surface of the flue 10 that is opposite the opening portion 14, become incident to the gas analyzing apparatus 100 once again, are focused by the concave mirror 110, and are received by the light receiving element 116.

A comparison of the received light intensity at the light receiving element 116 is made between the first laser light and the second laser light. The second laser light is attenuated due to scattering and absorption by dust passing through the flue 10 and scattering by the inner surface of the flue 10. On the other hand, the first laser light is attenuated due to absorption by the target gas, in addition to the scattering and absorption by the dust and scattering by the inner surface of the flue 10. Therefore, the effects of the scattering and absorption by the dust and inner surface of the flue 10 are cancelled out from the ratio between the received light intensity of the first laser light and the received light intensity of the second laser light, and it is possible to accurately measure the target gas concentration.

The gas analyzing apparatus 100 is capable of real-time measurement, and updates the measurement result of the target gas concentration every second, for example. In accordance with the update period of the measurement results, the gas analyzing apparatus 100 radiates the first laser light and the second laser light intermittently in pulses. The target gas concentration is calculated from the emitted light intensity and received light intensity of the respective pulse lights of the first laser light and the second laser light, and this calculated target gas concentration is output. As an example, the gas analyzing apparatus 100 detects the target gas using wavelength modulation spectrometry.

In a conventional gas analyzing apparatus, the light emitting section and light receiving section are arranged sandwiching the flue, and therefore it is necessary to provide openings at two locations opposite each other in the side wall of the flue. When attaching this gas analyzing apparatus to a flue that has already been made, it is necessary to machine the openings at two locations in the side wall of the flue and also to perform the involved task of adjusting the optical axes of the light emitting section and the light receiving section on-site. In contrast, the gas analyzing apparatus 100 according to the present embodiment has the light receiving section and the light emitting section formed integrally, and an opening only needs to be formed at one location in the side wall of the flue. Therefore, compared to the conventional gas analyzing apparatus, the operations of machining the flue and attaching the gas analyzing apparatus are simpler. Furthermore, since the light that has been reflected and/or scattered from the inner surface of the flue 10 is used to analyze the target gas concentration, there is no need to insert a reflective element such as a mirror into the flue 10, and it is possible to analyze the target gas concentration using a simple configuration.

The gas analyzing apparatus 100 according to the present embodiment is configured such that the central axes of the radiated light R1 and the reflected light R2 match within the flue 10. Therefore, even when the gas analyzing apparatus 100 is attached to various flues having different distances to the reflective surface, there is no need to adjust the arrangement of the optical elements on-site during the attachment.

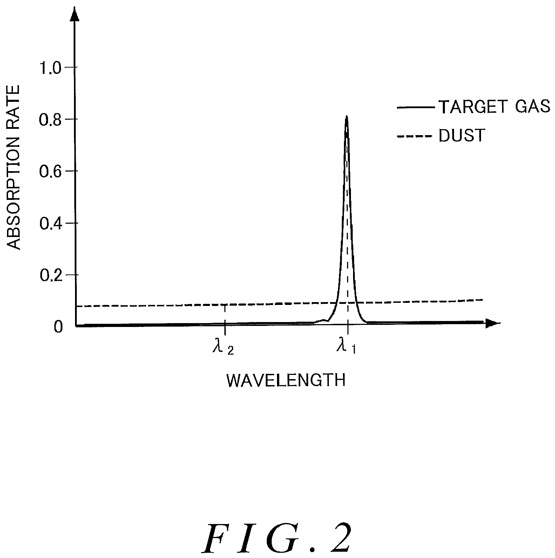

Fig. 2 shows exemplary spectral absorption rate characteristics of a target gas and dust. In Fig. 2, the vertical axis indicates the absorption rate and the horizontal axis indicates the wavelength. Furthermore, the spectral absorption rate of the target gas is shown by a solid line, and the spectral absorption rate of the dust is shown by a dashed line.

In the example of this drawing, focusing on the target gas, it is shown that the absorption rate of the target gas has a peak value of 0.8 at the wavelength λ₁. In other words, the target gas absorbs light with the wavelength λ₁ the most in the wavelength range shown in the drawing. On the other hand, the target gas barely absorbs light with the wavelength λ₂. Furthermore, focusing on the dust, the absorption rate of the dust is approximately 0.1 in the wavelength range shown in this drawing, and there are no significant changes.

In the example shown in this drawing, it is possible to set the wavelength λ₁, which is the wavelength for which the absorption rate of the target gas is high, as the first wavelength. Furthermore, it is possible to set a wavelength among wavelengths for which the absorption rate of the target gas is relatively low, e.g. the wavelength λ₂, as the second wavelength. In a case where oxygen (O₂) is the target gas, for example, 760 nm can be selected as the first wavelength λ₁ and 759 nm can be selected as the second wavelength λ₂.

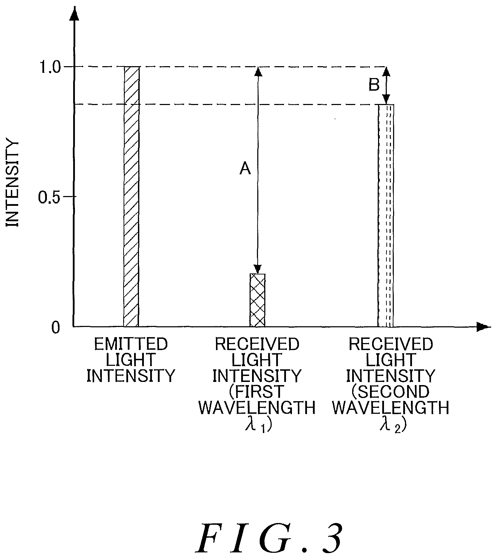

Fig. 3 is a drawing for explaining the basics of the relationship between the emitted light intensities and received light intensities of the first laser light and the second laser light. In this drawing, the vertical axis shows the relative intensity normalized with 1.0 being the emitted light intensity of the laser light, and the emitted light intensity of the first laser light and second laser light, the received light intensity of the first laser light, and the received light intensity of the second laser light are shown in the stated order from left to right.

In the example of this drawing, the emitted light intensity is equal for the first laser light with the first wavelength λ₁ and the second laser light with the second wavelength λ₂ emitted from the laser element 106. For ease of explanation, laser light absorption by elements such as the collimating lens 108 and the optical window 114 are not considered, and the spectral sensitivity of the light receiving element 116 is constant.

Furthermore, the first laser light is attenuated by being absorbed by the target gas and the dust when passing through the inside of the flue 10. In the example of this drawing, the received light intensity of the first laser light detected by the light receiving element 116 is attenuated only by an intensity change amount A relative to the emitted light intensity.

The second laser light is attenuated by being absorbed by the dust when passing through the inside of the flue 10. In the example of this drawing, the received light intensity of the second laser light detected by the light receiving element 116 is attenuated only by an intensity change amount B relative to the emitted light intensity.

As described with reference to Fig. 2, the absorption by the dust is always the same for the first wavelength λ₁ and the second wavelength λ₂. Accordingly, the absorption amount of the first laser light that is absorbed by the target gas can be calculated from the difference (A-B) between the intensity change amount A and the intensity change amount B.

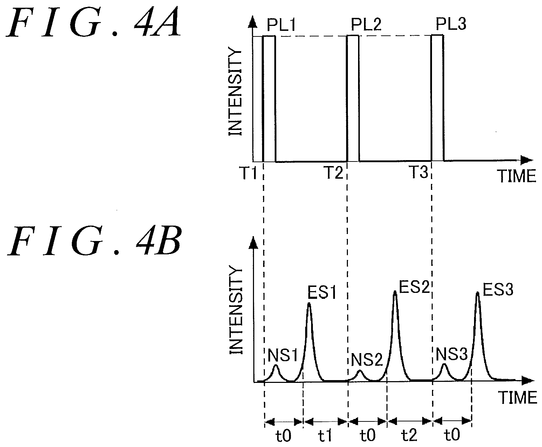

Fig. 4 shows the relationship between the light emission time and the light reception time of the pulse light. Fig. 4 shows the change over time of the intensity of the laser light that is the measurement light, i.e. the light signal of the laser light.

Fig. 4(a) shows the light signal of laser light emitted from the laser element 106. In Fig. 4(a), the vertical axis indicates the intensity of the emitted laser light and the horizontal axis indicates time. The laser element 106 emits the laser light in pulses at predetermined time intervals. In the example of Fig. 4(a), pulse lights PL1, PL2, and PL3 are respectively emitted at times T1, T2, and T3. The emitted light intensity described with reference to Fig. 3 is equivalent to the integrated value of the light signals over a segment, e.g. from T1 to T2, of the light signal shown in Fig. 4(a).

Fig. 4 (b) shows the light signal of the laser light received by the light receiving element 116. In Fig. 4(b), the vertical axis shows the intensity of the received laser light and the horizontal axis indicates time. In the example of Fig. 4(b), the signal NS1 and the signal ES1 are light signals corresponding to the pulse light PL1. The signal NS2 and the signal ES2 are light signals corresponding to the pulse light PL2. The signal NS3 and the signal ES3 are light signals corresponding to the pulse light PL3. The received light intensity described with reference to Fig. 3 is equivalent to the integrated value of a light signal shown in Fig. 4(b) over a segment, e.g. from T1 to T2.

There are cases where a portion of the radiated light R1 that is the pulse light is scattered by dust in the outgoing path up to being incident to the inner surface of the flue 10, returns to the gas analyzing apparatus 100, and is detected by the light receiving element 116. The scattered light in the outgoing path is a source of noise in the detection of the reflected light R2. In the example of Fig. 4(b), the signals NS1 to NS3 are light signals corresponding to the scattered light from the dust in the outgoing path.

A laser-type gas analyzing apparatus calculates the target gas concentration by using information of the intensity I₀ of the emitted laser light, the intensity I of the received laser light, and the length 1 of the path of the laser light. In the present embodiment, the target gas concentration is calculated from intensity information of the laser light that has travelled a path that includes being emitted from the gas analyzing apparatus 100, being reflected by the inner surface of the flue 10, and returning again to the gas analyzing apparatus 100. Specifically, with d representing the inner diameter of the flue 10, the gas analyzing apparatus 100 calculates the target gas concentration from the absorption amount that is absorbed by the target gas while the laser light propagates back and forth within the flue 10 over a total path length of 2d. Accordingly, as an example, the light scattered by the dust before reaching the inner surface of the flue 10 and detected by the light receiving element 116 is noise light that is unnecessary for calculating the target gas concentration. In particular, there are cases where the light scattered from the dust at a short distance from the gas analyzing apparatus 100 returns to the gas analyzing apparatus 100 with a relatively high intensity without being attenuated, and this causes a decrease in the measurement accuracy.

In this example, the gas analyzing apparatus 100 radiates the first laser light and the second laser light, cancels out the effect of the dust by taking the difference between the respective received light intensities, and calculates the absorption amount of only the target gas. Since the first laser light and the second laser light are emitted at different timings, there is a time lag between the emission times. Furthermore, the concentration distribution of the dust flowing through the inside of the flue 10 changes over time. Accordingly, the position in the outgoing path where scattering occurs due to the dust is different for the first laser light and the second laser light, and the intensity reaching the light receiving surface of the light receiving element 116 is also different. Therefore, even when the difference in the received light intensity between the first laser light and the second laser light is taken, there are cases where it is impossible to sufficiently cancel out the effect of scattered light from the dust in the outgoing path.

Therefore, in order to remove light signals caused by scattered light due to dust in the outgoing path that are described above, the gas analyzing apparatus 100 emits pulse lights and delays the light reception time of the light receiving element 116 until a time has passed that allows the emitted pulse light to be reflected by the inner surface of the flue 10 and return. In the present embodiment, the gas analyzing apparatus 100 calculates in advance the roundtrip time t0 required for the laser light emitted from the laser element 106 to be reflected by the inner surface of the flue 10 and reach the light receiving element 116, based on design values. The gas analyzing apparatus 100 causes the light receiving element 116 to begin detecting the incident light when this roundtrip time t0 has passed from the emission time of the laser light.

Explained with reference to Figs. 4(a) and 4(b), the light receiving element 116 begins detecting the incident light from a time (T1+t0) that is the roundtrip time t0 after the time T1 at which the pulse light PL1 is emitted. The light receiving element 116 continues detecting the incident light until the time T2 at which the next pulse light PL2 is emitted. Accordingly, the received light intensity output from the light receiving element 116 is the integrated value of the optical signal in the interval t1 in Fig. 4(b).

Similarly, the light receiving element 116 begins detecting the incident light from a time (T2+t0) that is the roundtrip time t0 after the time T2 at which the pulse light PL2 is emitted. The light receiving element 116 continues detecting the incident light until the time T3 at which the next pulse light PL3 is emitted. Accordingly, the received light intensity output from the light receiving element 116 is the integrated value of the optical signal in the interval t2 in Fig. 4(b).

The gas analyzing apparatus 100 may control the light reception timing of the light receiving element 116 such that, after the round trip time t0 has passed from when a pulse light was emitted, the incident light is detected until the nest pulse light is emitted. The gas analyzing apparatus 100 of the present embodiment stops the detection by the light receiving element 116 from when the laser light is emitted until the time t0 required for the emitted laser light to make a round trip within the flue 10 has passed, thereby excluding the scattered light caused by dust in the outgoing path from the detection target. In this way, a favorable SN ration can be maintained and the measurement accuracy can be improved.

When calculating the received light intensity, the method that removes the scattered light component caused by dust in the outgoing path is not limited to the method described above, and various methods can be used. In many cases, the intensity of the reflected light reflected by the inner surface of the flue 10 is higher than the intensity of the backward scattered light caused by the dust, and therefore the reflected light components (ES1 to ES3) have higher signal strengths than the components (N1 to N3) of the backward scattered light in the light signals. Therefore, for the pulse light PL1, for example, the light signal of the interval from the time T1 to the time T2 is sampled with a sampling period that enables the scattered light component and the reflected light component to be separated. Then, a peak hold circuit may be used to extract the peak value of the light signal, and the received light intensity may be calculated from the extracted peak value.

In the above description, an example is used in which the gas analyzing apparatus 100 calculates the target gas concentration from the intensity information of one pulse light from each of the first laser light and the second laser light and outputs the calculated target gas concentration. However, the gas analyzing apparatus 100 may calculate the target gas concentration by emitting 200 pulses of the laser light in one second, which is the update period for the measurement result, and statistically processing the received light intensity calculated for each pulse light. In such a case, the gas analyzing apparatus 100 may emit 100 pulses of the first laser light during the first half (0.5 seconds) of the period and emit 100 pulses of the second laser light during the second half (0.5 seconds) of the period, or may emit pulses of the first laser light and pulses of the second laser light in an alternating manner. By performing statistical processing on the calculation results from a plurality of pulse lights, the effect of the noise signal can be removed and the target gas concentration can be accurately obtained.

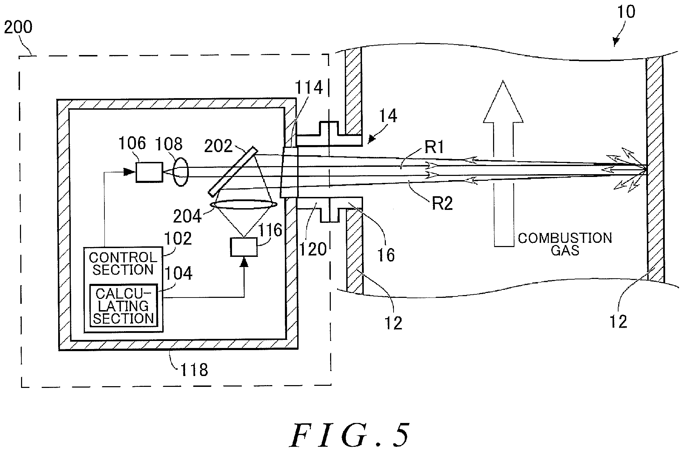

Fig. 5 is a schematic view of a configuration of a gas analyzing apparatus 200 according to a second embodiment. In order to avoid redundancy, detailed descriptions for portions that resemble those of the embodiment described above are omitted, and only features that are different from those of the embodiment described above are described in detail.

The gas analyzing apparatus 200 according to the present embodiment is configured by replacing the concave mirror 110 of the gas analyzing apparatus 100 according to the first embodiment with a half mirror 202 and a converging lens 204. The collimated light emitted from the collimating lens 108 is transparently passed by the half mirror 202 and irradiates the flue 10 as the radiated light R1. The radiated light R1 is reflected by the inner surface of the flue 10 and becomes incident to the gas analyzing apparatus 200 as reflected light R2. After this, the reflected light R2 is reflected by the half mirror 202 and then focused on the light receiving surface of the light receiving element 116 by the converging lens 204. By using the half mirror 202 and the converging lens 204 in this manner in the present embodiment, the entire beam of the reflected light R2 can be taken in by the light receiving element 116.

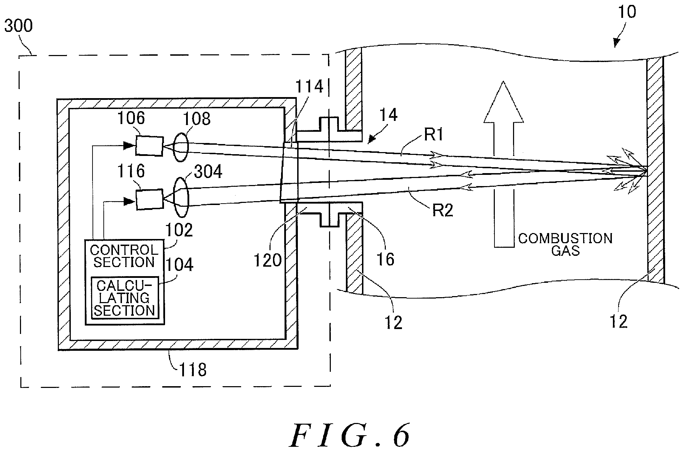

Fig. 6 is a schematic view of a configuration of a laser-type gas analyzing apparatus according to a third embodiment. In order to avoid redundancy, detailed descriptions for portions that resemble those of the embodiments described above are omitted, and only features that are different from those of the embodiments described above are described in detail.

The gas analyzing apparatus 300 according to the present embodiment is configured by replacing the concave mirror 110 of the gas analyzing apparatus 100 according to the first embodiment with a converging lens 304. The optical axis of the radiating section formed by the laser element 106 and the collimating lens 108 and the optical axis of the light receiving section formed by the converging lens 304 and the light receiving element 116 are arranged in a manner to intersect on the inner surface of the flue 10.

The collimated light emitted from the collimating lens 108 irradiates the flue 10 as the radiated light R1. The radiated light R1 is then reflected by the inner surface of the flue 10 and becomes incident to the gas analyzing apparatus 200 as reflected light R2. The reflected light R2 is then focused on the light receiving surface of the light receiving element 116 by the converging lens 304. By using different optical axes for the radiating section and the light receiving section in the manner of the present embodiment, it is possible for the entire beam of the reflected light R2 to be taken in by the light receiving element 116.

The converging lens 304 and the light receiving element 116 may be arranged such that the irradiation surface on the inner surface of the flue 10 irradiated by the radiated laser light and the light receiving surface of the light receiving element 116 are conjugate. By using this arrangement, it is possible to reduce the effect of incident light other than the laser light reflected from the irradiation surface. In particular, it is possible to reduce the effect of receiving backward scattered light caused by dust from a region near the optical axis of the laser. Furthermore, since there isn't necessarily a need to use pulse-emitted light if the effect of dust-scattered light is small enough, it is possible to measure the gas concentration with high sensitivity by applying wavelength modulation spectrometry while emitting the laser in a non-pulsed manner. The radiating section and the light receiving section may be arranged such that the space through which the laser light passes as seen from the light receiving surface of the light receiving section is maximized at the inner surface of the flue 10.

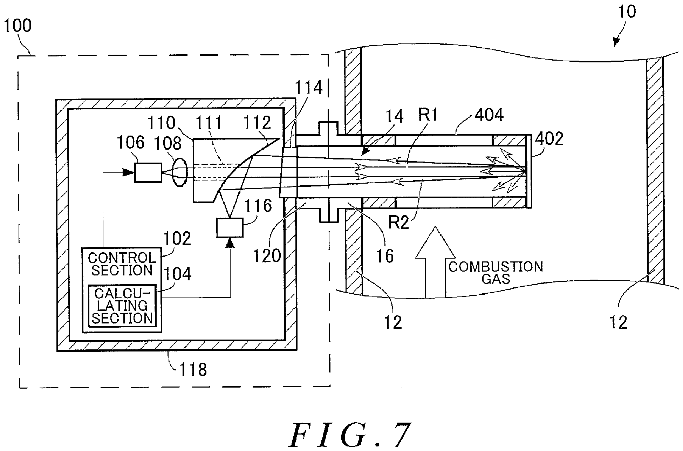

Fig. 7 is a schematic view of a configuration of a laser-type gas analyzing apparatus according to a fourth embodiment. In order to avoid redundancy, detailed descriptions for portions that resemble those of the embodiments described above are omitted, and only features that are different from those of the embodiments described above are described in detail.

The gas analyzing apparatus according to the present embodiment includes a target 402 to be irradiated by the laser light, in addition to the components of the gas analyzing apparatuses according to the first to third embodiments. The gas analyzing apparatus according to the present embodiment irradiates the surface of the target 402 with the laser light, instead of the inner surface of the side wall opposite the opening portion. The target 402 does not need to be a mirror, and may be an object that causes approximately the same amount of light absorption and light scattering as the inner surface of the side wall. The target 402 is supported by an insertion tube 404, for example. The insertion tube 404 is provided with an opening such that exhaust gas or combustion gas flows therein. Accordingly, the gas analyzing apparatus analyzes the exhaust gas or combustion gas flowing within the insertion tube 404. By adding this target 402, it is possible to limit the length of the light path to be a suitable length, and therefore it is possible to measure the gas even if the length of the flue exceeds 10 m or if the dust concentration is high and it is difficult for the light to pass transparently. The radiating section and the light receiving section may be arranged such that the space through which the laser light passes as seen from the light receiving surface of the light receiving section is maximized at the surface of the target 402.

The gas analyzing apparatuses according to the first to third embodiments described above may include a discharging section that discharges an auxiliary gas from the opening portion 14 to the flue 10. Nitrogen (N₂) gas containing a 0% or 20% concentration of the target gas can be used as the auxiliary gas, for example. By discharging the auxiliary gas from the discharging section toward the inner surface of the flue 10, the gas in the light path of the radiated light R1 and the reflected light R2 is replaced by the auxiliary gas, and calibration may be performed in a case where the concentration of the target gas is 0% or 20%.

Furthermore, a non-combustion component or the like is deposited as deposition material on the inner surface of the flue 10. This deposition material absorbs the radiated light R1, thereby reducing the amount of the reflected light R2 that is received. A decrease in the amount of reflected light R2 that is received causes a decrease in the concentration analyzing accuracy. Therefore, in the present embodiment, the deposition material may be removed at the position where the inner surface of the flue 10 is irradiated by the laser light, by discharging the auxiliary gas from the discharging section at high pressure. In this way, it is possible to restrict the decrease in the amount of reflected light R2 that is received due to the deposition material on the inner surface of the flue 10, thereby preventing a drop in the analyzing accuracy.

The above description uses examples of embodiments in which a gaseous mixture of the target gas and dust flows through the inside of the flue 10, the absorption components of the dust are cancelled out by using laser light having two wavelengths, and the target gas concentration is calculated. However, in a case where only the target gas flows inside the flue 10 or a case where a gas other than the target gas flows inside the flue 10 but does not significantly absorb the light of the absorption line of the target gas, it is possible to measure the concentration by radiating only laser light having the absorption line of the target gas. In a case where the target gas concentration is measured by radiating laser light with only one wavelength as well, only one opening needs to be provided in the side wall 12 of the flue 10.

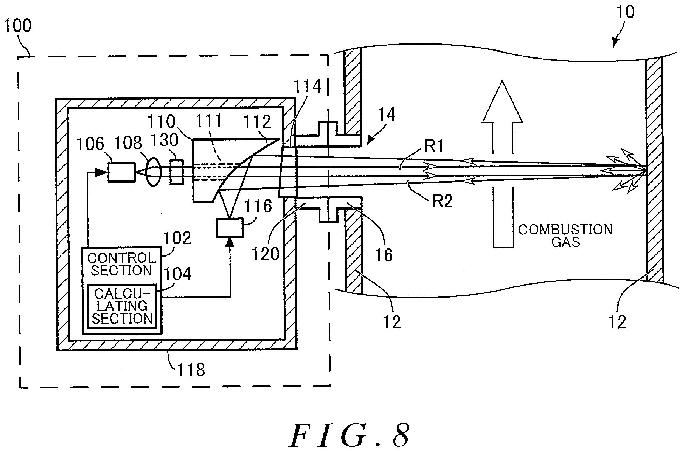

Fig. 8 is a schematic view of a configuration of a gas analyzing apparatus according to a fifth embodiment. In order to avoid redundancy, detailed descriptions for portions that resemble those of the embodiments described above are omitted, and only features that are different from those of the embodiments described above are described in detail.

The gas analyzing apparatus according to the present embodiment includes a speckle reducing element 130 in the light path in front of or at the rear of the laser light near the collimating lens 108, in addition to the configuration of the gas analyzing apparatus according to any one of the first to fourth embodiments. The speckle reducing element 130 may be a diffusion plate, i.e. a rough surface that is optically transparent. Furthermore, this plate may rotate or swing relative to the optical axis of the laser light. By adding such a speckle reducing element 130, it is possible to reduce speckling that occurs in the surface of the target 402 or the inner surface of the side wall opposite the opening portion. When speckles are present, the speckle pattern changes due to a change in the laser wavelength and the temperature in the light path, and noise can be added to the gas concentration measurement due to the change in the received light. Accordingly, by adding the speckle reducing element 130, it is possible to reduce the change in the speckle pattern, i.e. reduce the change in the amount of received light, and therefore it is possible to realize a more accurate and more stable measurement.

The gas analyzing apparatus according to the present invention is favorably used for a combustion gas control or combustion exhaust gas measurement, such as for a boiler or trash incinerator. The gas analyzing apparatus can also be used as an analyzer for various cases involving gas analysis for steel [blast furnace, converter furnace, heat treatment furnace, sintering (Beret equipment), or coke oven], fruit and vegetable storage, aging, biochemistry (microorganisms) [fermentation], air pollution [incinerator, flue gas desulfurization and/or denitration], exhaust gas from internal combustion engines of automobiles, boats, or the like (removal tester), disaster prevention [explosive gas detection, toxic gas detection, combustion gas analysis for new building materials], plant growth, chemical analysis [petroleum refining plant, petrochemical plant, gas generation plant], environments [landing concentration, tunnel concentration, parking, building management], and various physics experiments.

While the embodiments of the present invention have been described, the technical scope of the invention is not limited to the above described embodiments. It is apparent to persons skilled in the art that various alterations and improvements can be added to the above-described embodiments. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description. It is also apparent from the scope of the claims that the embodiments added with such alterations or improvements can be included in the technical scope of the invention.

### List of Reference Numerals

10: flue, 12, side wall, 14: opening portion, 16: flange, 100, 200, 300: gas analyzing apparatus, 102: control section, 104: calculating section, 106: laser element, 108: collimating lens, 110: concave mirror, 111: hole portion, 112: reflective surface, 114: optical window, 116: light receiving element, 118: case, 120: flange, 130: speckle reducing element, 202: half mirror, 204: converging lens, 304: converging lens, 402: target, 404: insertion tube, R1: radiated light, R2: reflected light

## Claims

1. A laser-type gas analyzing apparatus comprising:
a radiating section (106) that radiates laser light from outside a side wall (12) of a flue (10), through an opening portion (14) provided in the side wall (12), and onto an inner surface of the side wall (12) opposite the opening portion (14);
a light receiving section (116) that receives the laser light reflected by the inner surface; and
a calculating section (104) that calculates a concentration of a target gas passing through the flue (10), based on an intensity of the laser light output by the radiating section (106) and an intensity of the laser light received by the light receiving section (116).

2. The laser-type gas analyzing apparatus according to Claim 1, wherein
the radiating section (106) is operable to selectively radiate, as the laser light, first laser light having a wavelength centered on a first wavelength and second laser light having a wavelength centered on a second wavelength that is different from the first wavelength, and
the calculating section (104) calculates the concentration while reducing an effect of components other than the target gas, based on an intensity of the first laser light and an intensity of the second laser light output by the radiating section (106) and the intensity of the first laser light and the intensity of the second laser light received by the light receiving section (116).

3. The laser-type gas analyzing apparatus according to Claim 1 or 2, comprising:
an optical element that is provided in a light path of the laser light emitted from the radiating section (106) and refracts the laser light reflected by the inner surface toward the light receiving section (116).

4. The laser-type gas analyzing apparatus according to Claim 3, wherein
the optical element is a concave mirror (110) that includes a passing portion that passes the laser light radiated from the radiating section (106) and focuses the laser light reflected by the inner surface on the light receiving section (116).

5. The laser-type gas analyzing apparatus according to Claim 3, wherein
the optical element is a half mirror (204).

6. The laser-type gas analyzing apparatus according to Claim 1 or 2, comprising:
an optical system that has a focal point at a point where the laser light radiated from the radiating section (106) intersects with the inner surface and has an imaging point at one point on a light receiving surface of the light receiving section (116).

7. The laser-type gas analyzing apparatus according to any one of Claims 1 to 6, comprising:
a securing section (16, 120) that is secured to the side wall (12); and
a protective member (114) that is arranged closer to the radiating section side than the securing section and seals the optical path while allowing the laser light to pass through.

8. The laser-type gas analyzing apparatus according to Claim 7, wherein
a surface of the protective member (114)diagonally intersects a surface of the side wall (12).

9. The laser-type gas analyzing apparatus according to any one of Claims 1 to 8, wherein
the radiating section (106) pulse-radiates the laser light, and
the light receiving section (116) delays a light reception timing relative to a radiation timing of the pulse radiation.

10. The laser-type gas analyzing apparatus according to Claim 9, wherein
a delay time for the light reception timing is set based on distance to the inner surface.

11. The laser-type gas analyzing apparatus according to any one of Claims 1 to 10, comprising:
a discharging section that discharges an auxiliary gas from the opening portion (14) to the flue (10).

12. The laser-type gas analyzing apparatus according to any one of Claims 1 to 11, wherein
the radiating section (106) and the light receiving section (116) are arranged such that a space through which the laser light passes as seen from a light receiving surface of the light receiving section is maximized at the inner surface.

13. The laser-type gas analyzing apparatus according to any one of Claims 1 to 11, comprising:
a target surface that is opposite the opening portion (14) and is irradiated by the laser light instead of the inner surface.

14. The laser-type gas analyzing apparatus according to Claim 13, wherein the radiating section (106) and the light receiving section (116) are arranged such that a space through which the laser light passes as seen from a light receiving surface of the light receiving section is maximized at the target surface.

15. The laser-type gas analyzing apparatus according to any one of Claims 1 to 14, comprising:
a speckle reducing element (130) in a light path of the laser light emitted from the radiating section.
